# EUROPEAN PATENT SPECIFICATION

(11) **EP 0 404 854 B1**
(45) Date of publication and mention of the grant of the patent: **17.07.1996**
(21) Application number: 89907759.8
(22) Date of filing: 29.06.1989
(51) Int. Cl.: F01K 17/06, F26B 23/02

(54) **COMBINED GAS-TURBINE AND STEAM-TURBINE POWER PLANT AND METHOD FOR UTILIZATION OF THE THERMAL ENERGY OF THE FUEL TO IMPROVE THE OVERALL EFFICIENCY OF THE POWER-PLANT PROCESS**
KOMBINIERTES KRAFTWERK MIT GASTURBINE UND DAMPFTURBINE SOWIE VERFAHREN ZUR VERWENDUNG DER WÄRMEENERGIE DER BRENNSTOFFE ZUR STEIGERUNG DES GESAMTEN WIRKUNGSGRADES DES KRAFTWERKVERFAHRENS
CENTRALE ELECTRIQUE A TURBINE A GAZ ET A TURBINE A VAPEUR COMBINEES ET PROCEDE D'UTILISATION DE L'ENERGIE THERMIQUE DU COMBUSTIBLE DESTINE A AMELIORER L'EFFICACITE GLOBALE DU FONCTIONNEMENT DE LA CENTRALE ELECTRIQUE

(30) Priority: 30.06.1988 FI 883124
(43) Date of publication of application: 02.01.1991
(73) Proprietor: IMATRAN VOIMA OY, SF-00101 Helsinki (FI)
(72) Inventor: RAIKO, Markku, SF-02100 Espoo (FI); ÄIJÄLÄ, Martti, SF-00440 Helsinki (FI)
(74) Representative: Clifford, Frederick Alan
(86) International application number: FI8900125
(87) International publication number: WO9000219

(56) References cited:
- GB-A- 1 473 753
- SE-C- 0 419 974
- DERWENT'S ABSTRACT No. L9895 C/50, SU 730 991

## Description

Combined gas-turbine and steam-turbine power plant and method for utilization of the thermal energy of the fuel to improve the overall efficiency of the power-plant process.

The present invention concerns a combined gas-turbine and steam-turbine power plant.

The invention also concerns a method for utilization of the thermal energy of the fuel to improve the overall efficiency of the power-plant process.

In a combined power plant, both a gas turbine and a steam turbine are fitted to generate electricity. In typical processes of combined power plants, the input water of the steam-turbine circuit is circulated to cool the exhaust gases of the gas turbine. In the present power plants, a pre-dried solid fuel, e.g. peat, is used, which said fuel is burned as unpressurized, e.g. in a grate furnace, by dust burning, or by fluid bed combustion. A problem is caused by the drying of wet fuel. In order to obtain an optimal combustion result, it has been necessary to pre-dry the fuel. The present dryer combinations are not optimally suitable for processes of combined power plants. In particular, burning of peat in small power plants with the present-day boilers has been uneconomical.

The object of the present invention is to eliminate the drawbacks occurring in the technique described above and to provide a combined gas-turbine and steam-turbine power plant of an entirely new type which uses fuel that contains water as well as a method for utilization of the thermal energy of the fuel to improve the overall efficiency of the power-plant process.

In one aspect the invention consists in combined gas-turbine and steam-turbine power plant which uses a fuel and which comprises:
- a pressurized combustion or gasification unit,
- a pressurized dryer, from which dried fuel is fed by means of fuel-feed members into the combustion or gasification unit,
- a gas turbine, by means of which the energy of the flue gases is utilized,
- at least one flue-gas pipe connected to the combustion or gasification unit, by means of which the combustion or gasification products of the fuel are fed to the gas turbine,
- a compressor driven by the gas turbine, and connection thereof to the combustion or gasification unit whereby said unit is pressurized,
- a generator also driven by the gas turbine, by means of which generator electricity is produced,
- waste-heat recovery means, advantageously a waste-heat boiler, connected near the outlet of the gas turbine, by means of which the thermal energy of the flue gases is recovered, and
- a steam turbine and a generator driven by the steam turbine, by means of which generator electric energy is produced, the supply water for the steam turbine being heated by circulation through the combustion or gasification unit, or being heated by means of thermal energy obtained from the exhaust gases of the gas turbine,
characterised in that the combined gas-turbine and steam-turbine power plant comprises heat transfer members which directly or indirectly thermally interconnect the pressurized dryer and the waste-heat recovery means, by means of which the thermal energy recovered by waste heat recovery means is transferred either directly, or indirectly through the steam turbine, into the dryer for the drying of the fuel, and also comprises means for the passing of the steam produced in the drier as injection steam to the pressurised combustion or gasification unit so that it eventually arrives in the gas turbine.

The method of invention is mainly characterised in that the fuel is dried under pressure, at least partly by means of the thermal energy of the flue gases after the gas turbine, in a pressurized dryer, and the steam produced in the drying is supplied as injection steam to the combustion and gasification unit so that it eventually arrives in the gas turbine.

The combined power plant in accordance with the invention is mainly characterised by heat transfer members which directly or indirectly interconnect the pressurized dryer and the waste-heat recovery means, by means of which the recovered thermal energy of the exhaust gases from the gas turbine can be transferred directly (or through the steam turbine) into the dryer for the drying of the fuel, and for the passing of the steam produced as injection steam to the combustion and gasification unit.

In another aspect the invention consists in a method for utilization of the thermal energy of a fuel in order to improve the overall efficiency of a power-plant process in a combined gas-turbine and steam-turbine power plant, wherein water-containing fuel is dried under pressure and fed into a pressurized combustion or gasification unit wherein it is gasified or burnt; the flue gases produced are passed into the gas turbine to utilise the kinetic and thermal energy contained in the flue gases; a compressor is driven by the turbine to pressurize the combustion or gasification unit and a generator is also driven by the turbine to produce electric energy; the thermal energy of the flue gases that have passed through the gas turbine is recovered by means of waste-heat recovery means to generate or superheat steam or to heat water; the thermal energy from said gasification or burning is utilised to raise steam for said steam-turbine; and electrical energy is produced by a generator connected to said steam-turbine characterised in that the fuel is dried under pressure, at least partly by means of the direct or indirect transfer of thermal energy recovered by waste heat recovery means to a pressurized dryer, and in that the steam produced in such drying is supplied as injection steam to the combustion or gasification unit so that it eventually arrives in the gas turbine.

In the process in accordance with the invention, exhaust gases from the gas turbine are used. Advantageously, in an embodiment of the invention, heat obtained indirectly, i.e. via the steam turbine, is also used to generate steam in the dryer. Said dryer steam is passed into the combustion chamber before the gas turbine, where it substitutes for part of the air arriving through the compressor. The power requirement of the compressor is thus reduced and an increased proportion of the output of the turbine is converted to generator power. The net output obtained from the gas turbine is increased even by about 40 per cent. Thereat, the efficiency of the gas turbine is increased by about 25 per cent as a result of the fact that the ultimate temperature of the flue gases is lowered.

An abundance of air is needed to keep temperature in the combustion chamber at the desired level, i.e. at a level that is tolerated by the materials. When cooling air is substituted by the steam produced in the dryer, the power required for the compressing of the air becomes lower, and more power is available to the generator. In the dryer the generation of steam requires thermal power, which is taken from the waste heat of the flue gases and/or from bled steams of the steam turbine.

Thus, injection steam into the combustion or gasification unit is generated from the water obtained from the fuel dried in a pressurized dryer, and the energy required for said drying is provided by the waste heat from the gas turbine and/or advantageously also the energy obtained from bled steams from the steam turbine in the combined plant. Waste heat of the gas turbine can also be transferred to the steam-turbine process.

By means of a combined power plant in accordance with the invention it is possible to utilize the thermal energy of the fuel without any complicated pre-treatment of the fuel. Particular advantages are also obtained, e. g. in the combustion of the peat and brown coal. Thereat, the moisture contained in the fuel does not lower the process efficiency, but the moisture can be utilized. When the fuel consists of peat, in an optimal case only mechanical compression of the peat is necessary, whereby pre-treatment of the peat on the bog and drying of the peat material are omitted.

The present invention is therefore to be distinguished from those known to be prior art, for example: -

In British Patent GB 1473753 the invention disclosed concerns a combined power plant in which the drying of fuel is effected in a conventional manner. In the drying of the process carried out by fuel gases the flue gas used for the drying and the steam produced in the drying form a mixture which cannot be utilized, for instance, as process steam, but which is conducted into a chimney. Thus process efficiency is diminished compared to that achieved by the present invention.

In Russian Patent SU 730,991 the invention disclosed describes a gas-turbine process in which solid fuel is dried and ground before unpressurized gasification. The gas is cleaned and used as fuel for the gas turbine. The combustion chamber is provided with heat transfer surfaces in the steam-turbine process, through which surfaces part of the fuel power is transferred to serve as heat in the steam circuit. The conduction of heat to the unpressurized drying is carried out by means of pre-heated air. The steam produced in the drying is mixed with the drying air, and is passed away from the process.

The product steam from the drying is thus not used for injection steam in the gas turbine (via the gasification or combustion unit) which is essential to the present invention.

In the following, the invention will be examined in more detail with the aid of the exemplifying embodiment in accordance with the attached drawings.

Figure 1 is a schematical illustration of a gas-steam-turbine plant in accordance with the invention which uses water-containing fuel.

Figure 2 shows a second advantageous embodiment of a gas-steam-turbine plant in accordance with the invention.

Figure 3 shows a third advantageous embodiment of the gas-steam-turbine plant.

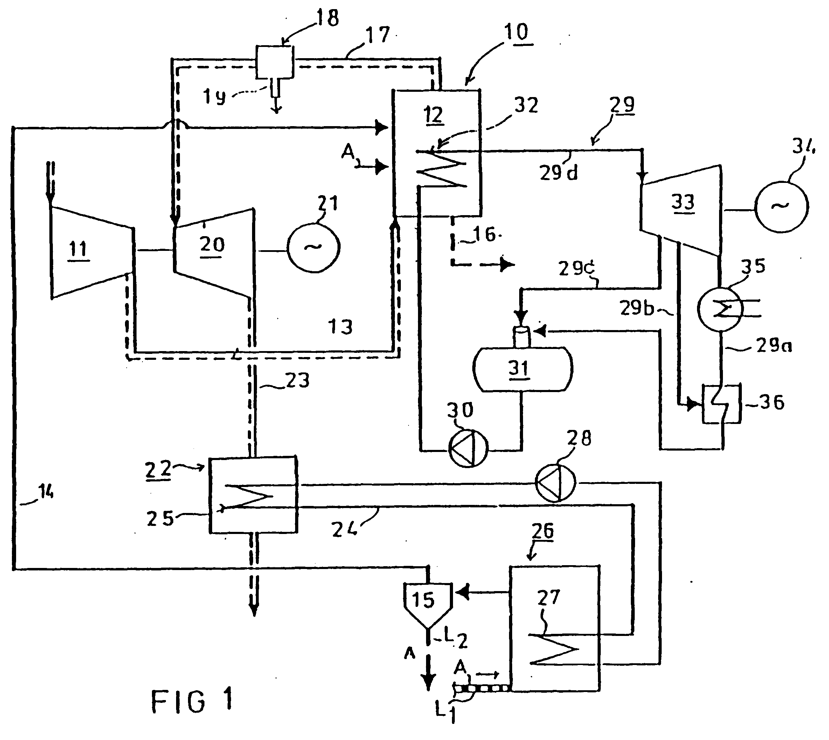

As is shown in Fig. 1, the fuel is burned in a pressurized combustion or gasification unit or combustion device 10, which comprises a combustion chamber 12 pressurized by means of a compressor 11. The compressor 11 produces the necessary combustion air, which is passed into the combustion device 10 through a system of compressed-air pipes 13. The compressor 11 raises the air pressure, e.g., to 12 bars. The pressure may be typically within the range of 5...50 bars. At said pressure, the air is then passed into the combustion device 10. Fuel A is fed into the combustion device 10. Owing to the burning of the fuel, the mixture of air and of the flue gases produced during combustion of the fuel is heated to about 850...1200°C. Into the combustion device 10, through the steam pipe 14, at least part of the steam is introduced that was separated in the steam separator 15 from the fuel flow. One objective of the supply of steam is regulation of the ultimate temperature in the combustion chamber. In such a case, the steam is substituted for some of the excess air that is normally needed. Owing to the supply of steam, the compressor power is lowered and the net output of the process is increased. Advantageously, a hot cleaner 18 for gases is placed in the duct 17. Part of the ashes from the fuel are removed from the combustion device 10 along the duct 16 straight out of the system, whereas the rest of the ashes pass along with the flue-gas flow into the flue-gas pipe system 17 and further to the hot cleaner 18 for flue gases, where more contaminated gas and the ashes are removed out of the process through the outlet duct 19.

After the cleaner 18 for flue or combustion gases the gases are passed further along the gas-pipe system 17 to the gas turbine 20, where the gases expand and generate kinetic energy. By means of the kinetic energy, the compressor 11 placed on the same shaft as well as the generator 21 are rotated, said generator 21 producing electricity. The pressure of the flue gases is lowered to the level of the environment while, at the same time, performing the work mentioned above in the gas turbine 20. The output obtained from the gas turbine 20 is higher than the power required by the compressor 11, whereby the excess power is recovered from the generator 21 of the gas turbine. After the gas turbine 20, the flue gases are passed into a separate device 22 for the recovery of waste heat, for example into a waste-heat boiler, along the duct 23. The temperature of the flue gases after the gas turbine 20 is typically 400...600°C. These gases are cooled to about 120°C in the device 22 for the recovery of heat, e.g. a waste-heat boiler. The heat obtained from the flue gases by means of the device 22 for the recovery of heat is transferred to drying of the fuel A in the dryer. After the heat-recovery device 22 the flue gases are removed out of the plant. In the heat-recovery device 22 it is possible to generate steam, superheat steam, or to preheat the circulation water, which is then passed further to the heat-exchanger of the dryer, where the heat is transferred into the material to be dried.

The circulation pipe system 24 for the heat transfer medium, advantageously water and/or steam, includes, in the heat-recovery device 22, advantageously a waste-heat boiler, a heat exchanger 25 and, in a corresponding way, in the dryer 26, another heat exchanger, advantageously a condenser 27. A pump 28 circulates the heat transfer medium, advantageously water, in the circulation pipe system 24.

In the heat-recovery device 22, heat is transferred from the flue gases through the heat exchanger 25 into the water in the circulation pipe system 24, whereby the water is vaporized, and said steam is carried by means of the pump 29 into the heat exchanger 27 present in the dryer 26, where the heat is transferred further into the material to be dried.

In the steam-turbine process the supply-water pipe system 29 also includes a supply-water pump 30. The pump 30 is fitted to pump supply water of the steam turbine 33 in the supply-water pipe system 29 from the supply-water tank 31 to the steam generator 32 placed in the combustion device 10.

The steam-turbine process includes a steam generator 32, a steam turbine 33, a generator 34 that produces electricity and is connected to the steam turbine 33, and a condenser 35 and a pre-heater of supply water. In the embodiment of the invention shown in the figure, the combustion chamber 12 of the gas turbine 20, at the same time, also acts as the boiler of the steam-turbine process, wherein the steam passed to the steam turbine 33 is generated. Thus, by means of the fuel A burned in the combustion chamber 12 of the gas turbine 20, it is possible both to heat the gases that pass to the gas turbine 20 and to generate steam for the steam-turbine process in the steam generator 32. The temperature of the steam arriving in the steam turbine 33 is typically 530°C and the pressure 100...180 bars. The pressure prevailing in the condenser 35 is typically 0.05 bar, and the temperature thereat 30°C. In the condenser 35, the steam is condensed to water. By means of the supply-water pump 30, the pressure of the condensed water is again raised to the level of the boiler pressure. The supply water is pumped by means of the pump 30 from the tank 31 to the steam generator 32, which is placed in the combustion chamber 12 of the gas turbine 20, as was described above.

From the steam turbine 33 a connecting duct 29a passes through the condenser 35 and the pre-heater 36 to the tank 31. From the steam turbine 33 a connecting duct 29b passes to the pre-heater 36 for the purpose of pre-heating of the supply water of the line 29a, taking place by means of bled steam. From the steam turbine 33 a connecting duct 29c passes to the tank 31. From the tank 31 a connecting duct 29d passes through the pump 30 and the vaporizer 32 to the steam turbine 33.

The drying of the water-containing fuel A takes place in the pressurized dryer 26 at the combustion pressure. The wet fuel A that contains water is fed into the dryer 26 typically to a pressure of about 12 bars. In the dryer 26, the wet fuel A becomes dry and, at the same time, steam at the combustion pressure is generated. Said steam is used as injection steam for the gas turbine 20 by passing the steam into the combustion device, i.e. the combustion unit 10. The dry fuel A is passed out of the dryer 26 into the combustion device 10 along a transportation path of L₂ of its own.

In the following, the process of drying of the fuel A will be described in more detail.

The fuel flow A is passed along the duct L₁ or some other, corresponding supply path into the dryer 26. As the fuel A, it is possible to use, e.g., milled peat of a moisture content of 70 %. In the process in accordance with the invention, it is also possible to use fuel, in particular peat, which has been dried only mechanically and whose moisture content may be even higher than 75 %. The drying takes place in the pressurized dryer 26 at the combustion pressure, advantageously at a pressure of about 12 bars. In the present application, a pressurized dryer is to be understood as a dryer whose drying space is at a positive pressure relative the atmospheric pressure. In such a case, the moisture contained in the fuel A is obtained as a medium in the process. The steam produced in the drying is passed along the duct 14 into the combustion device 10 of the gas turbine 20 into its combustion chamber 12. In principle, the fuel A may be any solid or liquid fuel that contains water. In the pressurized dryer the moist fuel is dried, e.g., to a moisture content of 20 %. The drying energy for the dryer 26 is obtained along the pipe system 24 from the recovery 22 of the heat from the flue gases of the gas turbine 20.

In the combustion device 10, the fuel A may be either burned directly, or such a solution is also possible in which direct burning is replaced by gasification or partial gasification of the fuel and by burning of the gas produced.

Purification of the gas may take place at the combustion or gasification temperature or at some lower temperature. The steam produced in the dryer 26 is passed along the duct 14 as injection steam into the combustion or gasification device.

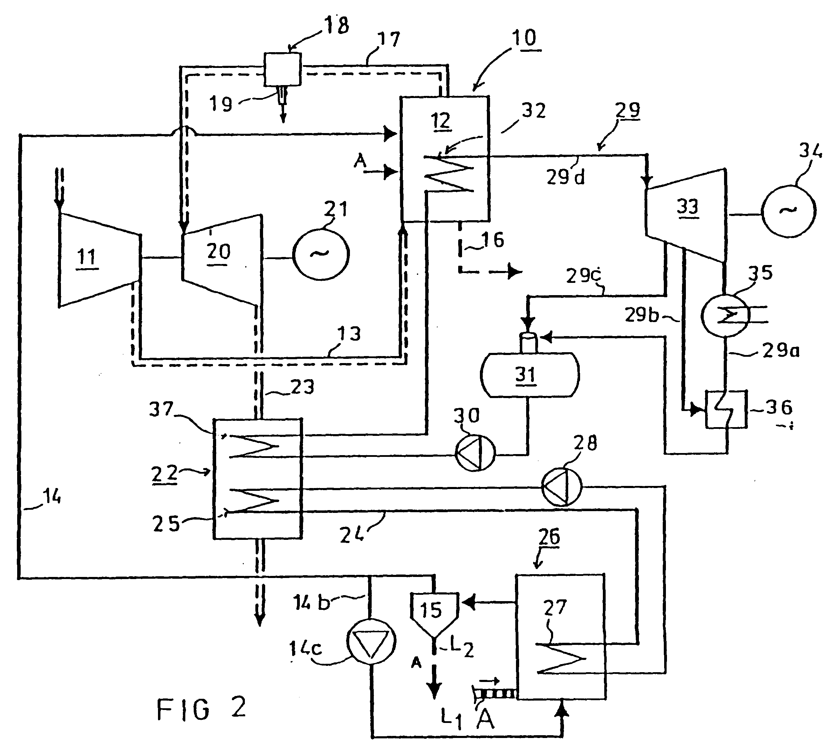

Fig. 2 illustrates an embodiment of the invention wherein the supply water for the steam-turbine process is pre-heated by means of the energy obtained from the flue gases of the gas turbine in the heat-recovery device 22. In this embodiment shown in the figure, in the heat-recovery device, the heat from the flue gases can be transferred both to the drying of the fuel A in the dryer 26 and to the steam-turbine process for preheating of the supply water for the steam turbine 33 or for vaporization of the supply water for the steam-turbine process or for superheating of said steam. In the other respects, the embodiment shown in Fig.2 is generally equivalent to the embodiment of Fig.1. In the heat-recovery device 22, a heat exchanger 37 is placed, which is connected with the supply-water pipe system 29.

From the steam turbine 33 a connecting duct 29a passes through the condenser 35 and the pre-heater 36 to the tank 31. From the steam turbine 33 a connecting duct 29b passes to the pre-heater 36 for pre-heating of the supply water of the line 29a, taking place by means of bled steam. From the steam turbine 33 a connecting duct 29c passes to the tank 31. From the tank 31 a connecting duct 29d passes through the pump 30, the heat exchanger 37 and the vaporizer 32 to the steam turbine 33.

Fig. 2 shows an embodiment of the invention wherein the steam produced in the drying is circulated in the circulation circuit 14b by means of the pump 14c and part of the steam is taken along the duct 14 to constitute injection steam.

The dryer may also operate by means of some other principle, such as, for example, so that the steam produced in the dryer is superheated and recirculated as superheated into the dryer and, under these circumstances, no internal heat-transfer pipe system in the dryer is needed.

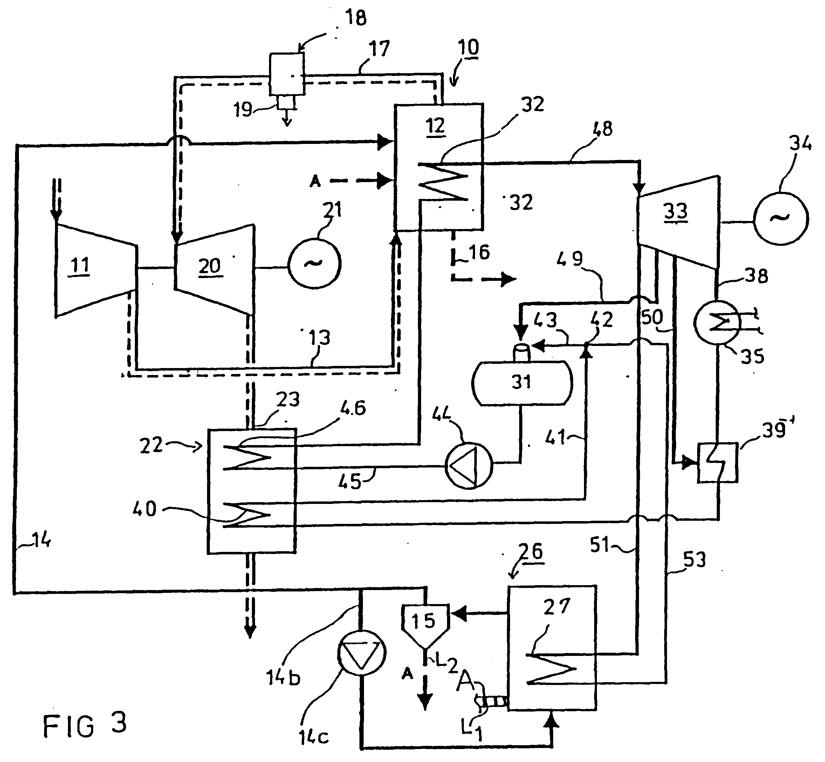

Fig. 3 shows a third advantageous embodiment of the invention as a schematical illustration. In this embodiment of the invention, the heat is recovered from the waste heat of the gas turbine in the heat-recovery device 22, and said heat is transferred to pre-heating of the supply water. In this embodiment of the invention, the supply water of the steam turbine in the steam-turbine process is circulated through the heat-recovery device 22 placed in the flue-gas duct of the gas turbine and, further, said supply water is circulated into the steam generator 32 placed in the combustion device 10 and, further, said superheated steam is transferred to the steam turbine 33. This embodiment of the invention differs from the embodiments described above in the respect that heat obtained from bled steams of the steam turbine is used for the drying of fuel in the dryer.

Within the scope of the invention, a solution is possible that differs from the embodiment shown in Fig. 2 in the respect only that the supply water of the steam-turbine process is circulated through the waste-heat boiler 22 only.

In the embodiment of the invention shown in Fig. 3, the supply water passes from the condenser 35 along the system of ducts 38 through the heat exchanger 39 to the heat exchanger 40 placed in the device 22 for the recovery of the heat from the flue gases of the gas turbine 20, from which said heat exchanger 40 the supply water is carried further along the connecting duct 41 through the branching point 42 along the duct 43 to the supply-water tank 31. From the supply-water tank 31 the supply water is pumped by means of the pump 44 along the duct 45 to the heat exchanger 46 placed in the heat-recovery device 22. Along the duct 47, the pre-heated supply water is pumped by means of the pump 44 into the pipe system of the vaporizer 32 placed in the combustion device 10 and further along the connecting duct 48 to the steam turbine 33. From the steam turbine 33, a connecting duct 49 for bled steam passes to the supply-water tank 31. The duct 50 is passed to the pre-heater 39 for supply water, and in this way bled steam from the steam turbine 33 is used for pre-heating of the supply water passed along the duct 38.

Further, from the steam turbine 33 a duct 51 for bled steam passes to the pressurized dryer 26. The duct 51 passes through the heat exchanger 27 placed in the dryer 26, and further the condensed water coming from the dryer is passed along the duct 53 through the branching point 42 to the duct 43 and further to the supply-water tank 31. The branching may also be made to some other part of the supply-water line.

Thus, in the embodiment of the invention shown in Fig. 3, the fuel A is dried by means of heat obtained from bled steams of the steam turbine. In the embodiment of Fig. 3, the supply water that is carried to the steam generator 32 is pre-heated by means of thermal energy obtained from the flue gases of the gas turbine 20. In the embodiment of Fig. 3, in the way corresponding to the embodiments shown in Figs. 1 and 2, the fuel is passed through the steam separator 15, from which at least part of the steam is passed along the duct 14 as injection steam into the combustion device 10, and further the dried fuel A is carried along the path L₂ as fuel to the combustion or gasification device 10 of the gas turbine and the steam turbine. In the embodiment of Fig. 3, the steam produced in the dryer 10 is recirculated in the same way as in the embodiment of Fig. 2.

Within the scope of the invention, an embodiment is also possible wherein the steam produced in the drying in the pressurized dryer is recirculated through some waste-heat boiler, e.g. through the waste-heat boiler 22 of the gas turbine, and in which said boiler the steam is superheated, whereinafter said steam is passed back into the dryer. Part of the recirculation steam is taken as injection steam to the gas turbine 20.

Within the scope of the present invention, the dryer used is not bound to any particular dryer type.

## Claims

1. Combined gas-turbine and steam-turbine power plant which uses a fuel and which comprises:
- a pressurized combustion or gasification unit (10),
- a pressurized dryer (26), from which dried fuel is fed by means of fuel-feed members into the combustion or gasification unit (10),
- a gas turbine (20), by means of which the energy of the flue gases is utilized,
- at least one flue-gas pipe (17) connected to the combustion or gasification unit (10), by means of which the combustion or gasification products of the fuel are fed to the gas turbine (20),
- a compressor (11) driven by the gas turbine (20), and connection thereof to the combustion or gasification unit (10) whereby said unit is pressurized,
- a generator (21) also driven by the gas turbine (20), by means of which generator electricity is produced,
- waste-heat recovery means (22), advantageously a waste-heat boiler, connected near the outlet of the gas turbine, by means of which the thermal energy of the flue gases is recovered, and
- a steam turbine (33) and a generator (34) driven by the steam turbine, by means of which generator electric energy is produced, the supply water for the steam turbine (33) being heated by circulation through the combustion or gasification unit (10), or being heated by means of thermal energy obtained from the exhaust gases of the gas turbine (20),
characterised in that the combined gas-turbine (20) and steam-turbine (33) power plant comprises heat transfer members which directly or indirectly thermally interconnect the pressurized dryer (26) and the waste-heat recovery means (22), by means of which the thermal energy recovered by waste heat recovery means 22 is transferred either directly, or indirectly through the steam turbine (33), into the dryer (26) for the drying of the fuel, and also comprises means for the passing of the steam produced in the drier as injection steam to the pressurised combustion or gasification unit (10) so that it eventually arrives in the gas turbine (20).

2. Combined gas-turbine and steam turbine power plant as claimed in claim 1, characterised in that the combined power plant comprises heat-recovery members (37) for the transfer of the waste heat from the gas turbine (20) into supply water for the steam turbine (33) to pre-heat said water or to generate or superheat steam.

3. Combined gas-turbine and steam-turbine power plant as claimed in claim 1 or 2, characterised in that the combined power plant comprises heat-transfer members (51,27) for the transfer of the thermal energy of bled steam of the steam turbine to drying of fuel that takes place in the pressurized dryer (26).

4. Method for utilization of the thermal energy of a fuel in order to improve the overall efficiency of a power-plant process in a combined gas-turbine (20) and . steam-turbine (33) power plant, wherein water-containing fuel is dried under pressure (26) and fed into a pressurized combustion or gasification unit (10) wherein it is gasified or burnt; the flue gases produced are passed into the gas turbine (20) to utilise the kinetic and thermal energy contained in the flue gases; compressor (11) is driven by the turbine (20) to pressurize the combustion or gasification unit (10) and a generator (21) is also driven by turbine (20) to produce electric energy; the thermal energy of the flue gases that have passed through the gas turbine (20) is recovered by means of waste-heat recovery means (22) to generate or superheat steam or to heat water; the thermal energy from said gasification or burning is utilised to raise steam for said steam-turbine (33); and electrical energy is produced by a generator (34) connected to said steam-turbine (33) characterised in that the fuel is dried under pressure, at least partly by means of the direct or indirect transfer of thermal energy recovered by waste heat recovery means (22) to a pressurized dryer (26), and in that the steam produced in such drying is supplied as injection steam to the combustion or gasification unit (1) so that it eventually arrives in the gas turbine (2).

5. Method as claimed in claim 4, characterised in that thermal energy recovered by waste heat recovery means (22) is used in order to preheat the supply water for the steam turbine (33) or to generate or superheat steam.

6. Method as claimed in claim 5, characterised in that thermal energy obtained from bled steams of the steam turbine (33) is used for drying of the fuel taking place in the dryer (26) as an indirect energy transfer.

7. Method as claimed in any of the claims 4, 5 or 6, characterised in that steam produced in the dryer is recirculated to the waste-heat recovery means wherein it is superheated by the thermal energy recovered therein from the gas turbine exhaust gases, and thereafter returned to among the material to be dried into the dryer, where it directly delivers thermal energy to the drying of the fuel.

## Patentansprüche

1. Kombiniertes Gasturbinen- und Dampfturbinen-Kraftwerk, das einen Brennstoff verwendet sowie umfaßt:
- eine Überdruck-Verbrennungs- oder Vergasungsanlage (10),
- einen Drucktrockner (26), von dem getrockneter Brennstoff mit Hilfe von Brennstoffzuführelementen in die Verbrennungs- oder Vergasungsanlage (10) eingeführt wird,
- eine Gasturbine (20), durch welche die Energie der Rauchgase ausgenutzt wird,
- mindestens eine mit der Verbrennungs- oder Vergasungsanlage (10) verbundene Rauchgasleitung (17), mittels welcher die Verbrennungs- oder Vergasungsprodukte des Brennstoffs der Gasturbine (20) zugeführt werden,
- einen von der Gasturbine (20) angetriebenen Kompressor (11) und eine Verbindung von diesem mit der Verbrennungs- oder Vergasungsanlage (10), wodurch diese Anlage unter Druck gesetzt wird,
- einen ebenfalls von der Gasturbine (20) angetriebenen Generator (21), durch welchen Generator Elektrizität erzeugt wird,
- eine Abwärmerückgewinnungsanlage (22), vorteilhafterweise einen Abhitzekessel, die/der nahe dem Auslaß der Gasturbine angeschlossen ist, mittels welcher/welchem die Wärmeenergie der Abgase wiedergewonnen wird, und
- eine Dampfturbine (33) sowie einen von der Dampfturbine angetriebenen Generator (34), durch welchen Generator Elektroenergie erzeugt wird, wobei das Speisewasser für die Dampfturbine (33) mittels Umlauf durch die Verbrennungs- oder Vergasungsanlage (10) oder mittels der aus den Abgasen der Gasturbine (20) gewonnenen Wärmeenergie erhitzt wird,
dadurch gekennzeichnet, daß das kombinierte Gasturbinen (20)- und Dampfturbinen (33)-Kraftwerk Wärmeüberträgungselemente enthält, die direkt oder indirekt den Drucktrockner (26) sowie die Abwärmerückgewinnungsanlage (22) thermisch miteinander verbinden, wodurch die von der Abwärmerückgewinnungsanlage (22) wiedergewonnene Wärmeenergie entweder direkt oder indirekt durch die Dampfturbine (33) in den Trockner (26) zum Trocknen des Brennstoffs überführt wird, und auch Einrichtungen umfaßt, um den im Trockner erzeugten Dampf der Überdruck-Verbrennungs- oder Vergasungsanlage (10) als Injektionsdampf zuzuleiten, so daß dieser letztlich in der Gasturbine (20) ankommt.

2. Kombiniertes Gasturbinen- und Dampfturbinen-Kraftwerk nach Anspruch 1, dadurch gekennzeichnet, daß das kombinierte Kraftwerk Wärmerückgewinnungselemente (37) für die übertragung der Abwärme von der Gasturbine (20) in das Speisewasser für die Dampfturbine (33), um das genannte Wasser vorzuwärmen oder Dampf zu erzeugen oder zu überhitzen, enthält.

3. Kombiniertes Gasturbinen- und Dampfturbinen-Kraftwerk nach Anspruch 1 oder 2, dadurch gekennzeichnet, daß das kombinierte Kraftwerk Wärmeübertragungselemente (51, 27) für die Übertragung der Wärmeenergie von Anzapfdampf der Dampfturbine, um Brennstoff zu trocknen, der sich im Drucktrockner (26) befindet, enthält.

4. Verfahren zur Verwertung der Wärmeenergie eines Brennstoffs, um den Gesamtwirkungsgrad eines Kraftwerkprozesses in einem kombinierten Gasturbinen (20)- und Dampfturbinen (33)-Kraftwerk zu steigern, wobei wasserhaltiger Brennstoff unter Druck getrocknet sowie in eine Verbrennungs- oder Vergasungsanlage (10), in welcher dieser vergast oder verbrannt wird, eingeführt wird; die erzeugten Rauchgase in die Gasturbine (20) geführt werden, um die kinetische sowie thermische, in den Rauchgasen enthaltene Energie auszunutzen; ein Kompressor (11) von der Turbine (20) angetrieben wird, um die Verbrennungs- oder Vergasungsanlage (10) unter Überdruck zu halten, und ein Generator (21) ebenfalls vcn der Turbine (20) angetrieben wird, um Elektroenergie zu erzeugen; die Wärmeenergie der Rauchgase, die durch die Gasturbine (20) geströmt sind, mittels einer Abwärmerückgewinnungsanlage (22) wiedergewonnen wird, um Dampf zu erzeugen oder zu überhitzen oder Wasser zu erwärmen; die Wärmeenergie aus der genannten Vergasung oder Verbrennung genutzt wird, um Dampf für die besagte Dampfturbine (33) zu erzeugen; und durch einen mit der besagten Dampfturbine (33) verbundenen Generator (34) Elektroenergie erzeugt wird, dadurch gekennzeichnet, daß der Brennstoff unter Druck mindestens teilweise mittels der direkten oder indirekten Übertragung von durch die Abwärmerückgewinnungsanlage (22) wiedergewonnener Wärmeenergie zu einem Drucktrockner (26) unter Druck getrocknet wird und daß der bei diesem Trocknen erzeugte Dampf als Einspritzdampf der Verbrennungs- oder Vergasungsanlage (10) zugeführt wird, so daß er letztlich in der Gasturbine (20) ankommt.

5. Verfahren nach Anspruch 4, dadurch gekennzeichnet, daß durch die Wärmerückgewinnungsanlage (22) wiedergewonnene Wärmeenergie verwendet wird, um das Speisewasser für die Dampfturbine (33) vorzuwärmen oder Dampf zu erzeugen oder zu überhitzen.

6. Verfahren nach Anspruch 5, dadurch gekennzeichnet, daß von Anzapfdampf der Dampfturbine (33) gewonnene Wärmeenergie als eine indirekte Energieübertragung verwendet wird, um den sich im Trockner (26) befindenden Brennstoff zu trocknen.

7. Verfahren nach einem der Ansprüche 4, 5 oder 6, dadurch gekennzeichnet, daß im Trockner erzeugter Dampf zur Abwärmerückgewinnungsanlage zurückgeführt wird, in der dieser durch die darin aus den Gasturbinenabgasen wiedergewonnene Wärmeenergie überhitzt wird, und danach in den Trockner zwischen das zu trocknende Material zurückgeleitet wird, wo er Wärmeenergie unmittelbar zum Trocknen des Brennstoffs abgibt.

## Revendications

1. Centrale électrique à turbine à gaz et à turbine à vapeur combinées utilisant un combustible et qui comprend:
une unité de gazéification de combustion sous pression (10),
un sécheur sous pression (6) à partir duquel le combustible séché est amené par des éléments d'alimentation de combustible dans l'unité de combustion ou de gazéification (10),
une turbine à gaz (20), au moyen de laquelle on utilise l'énergie des gaz de fumée,
au moins une conduite de gaz de fumée (17) raccordée à l'unité de combustion de gazéification (10), au moyen de laquelle sont amenés les produits de combustion ou de gazéification du combustible dans la turbine à gaz (20),
un compresseur (11) entraîné par la turbine à gaz (20) et sa connexion à l'unité de combustion de gazéification (10), mettant cette unité sous pression,
un générateur (21) également entraîné par la turbine à gaz (20), au moyen de laquelle est produite l'électricité du générateur,
des moyens de récupération de chaleur perdue (22), avantageusement une chaudière à chaleur perdue, raccordé à proximité de la sortie de la turbine à gaz, au moyen desquels est récupérée l'énergie thermique des gaz de fumée, et
des turbines à vapeur (33) et un générateur (34) entraîné par une turbine à vapeur, au moyen de laquelle est produite l'énergie électrique du générateur, l'eau d'alimentation pour la turbine à vapeur (33) étant chauffée par circulation à travers l'unité de combustion ou de gazéification (10), qui doit chauffer au moyen de l'énergie thermique obtenue à partir des gaz de rejet de la turbine à gaz (20),
caractérisée en ce que la centrale électrique à turbine à gaz (20) et à turbine à vapeur (33) combinées comprend des éléments de transfert de chaleur qui relient thermiquement entre eux directement ou indirectement le sécheur sous pression (26) et les moyens de récupération de la chaleur perdue (22) au moyen desquels l'énergie thermique récupérée par des moyens de récupération de chaleur perdue (22) est transférée soit directement soit indirectement par la turbine à vapeur (33) dans le sécheur (26) pour le séchage du combustible et comprend également des moyens pour faire passer la vapeur produite dans le sécheur sous forme de vapeur d'injection à destination de l'unité de combustion de gazéification sous pression (10) de façon à aboutir finalement dans la turbine à gaz (20).

2. Centrale électrique à turbine à gaz et à turbine à vapeur combinées selon la revendication 1, caractérisée en ce que la centrale électrique combinée comprend des éléments de récupération de chaleur (37) pour le transfert de la chaleur perdue provenant de la turbine à gaz (20) dans l'eau d'alimentation pour la turbine à gaz (33) pour préchauffer cette eau ou pour générer ou superchauffer la vapeur.

3. Centrale électrique à turbine à gaz et à turbine à vapeur combinées selon la revendication 1 ou 2, caractérisée en ce que la centrale électrique combinée comprend des éléments de transfert de chaleur (51,27) pour le transfert de l'énergie thermique de la vapeur purgée de la turbine à vapeur, pour sécher le combustible qui s'effectue dans le sécheur sous pression (26).

4. Procédé pour l'utilisation de l'énergie thermique d'un combustible pour améliorer l'efficacité globale d'un procédé de centrale électrique dans une centrale électrique à turbine à gaz (20) et à turbine à vapeur (23) combinées, dans lequel le combustible contenant de l'eau est séché sous pression (26) et amené dans une unité de combustion de gazéification sous pression (10), dans lequel il est gazéifié ou mis en combustion. Les gaz de fumée produits sont acheminés dans la turbine à gaz (20) pour utiliser l'énergie cinétique et thermique contenue dans les gaz de fumée; le compresseur (11) est entraîné par la turbine (20) pour mettre sous pression l'unité de combustion de gazéification (10) et un générateur (21) est également entraîné par turbine (20) pour produire de l'énergie électrique; l'énergie thermique des gaz de fumée qui a traversé la turbine à gaz (20) est récupérée par des moyens de récupération de chaleur perdue (22) pour générer et surchauffer la vapeur ou pour chauffer l'eau; l'énergie thermique provenant de la gazéification ou de la combustion est utilisée pour soulever la vapeur pour la turbine à vapeur (33); et l'énergie électrique est produite par un générateur (34) relié à la turbine à vapeur (33), caractérisé en ce que le combustible est séché sous pression, au moins partiellement par transfert direct ou indirect de l'énergie thermique récupérée par des moyens de récupération de la chaleur perdue (22) à destination d'un sécheur sous pression (26), et en ce que la vapeur produite dans ce séchage est fournie en tant que vapeur d'injection à l'unité de combustion de gazéification (1) de façon à aboutir finalement dans la turbine à gaz (2).

5. Procédé selon la revendication 4, caractérisé en ce que l'énergie thermique récupérée par des moyens de récupération de chaleur perdue (22) est utilisée pour préchauffer l'eau d'alimentation pour la turbine à vapeur (33) ou pour générer ou surchauffer la vapeur.

6. Procédé selon la revendication 5, caractérisé en ce que l'énergie thermique obtenue à partir des vapeurs purgées de la turbine à vapeur (33) est utilisée pour le séchage du combustible s'effectuant dans le sécheur (26) sous forme de transfert d'énergie indirecte.

7. Procédé selon l'une quelconque des revendications 4, 5 ou 6, caractérisé en ce que la vapeur produite dans le sécheur est remise en circulation dans les moyens de récupération de chaleur perdue, dans lesquels elle est surchauffée par l'énergie thermique récupérée à partir des gaz d'échappement de la turbine à gaz et ensuite renvoyée parmi les matières à sécher dans le sécheur où elle libère directement de l'énergie thermique pour le séchage du combustible.
